# EUROPÄISCHE PATENTSCHRIFT

(11) **EP 2 898 201 B1**
(45) Veröffentlichungstag und Bekanntmachung des Hinweises auf die Patenterteilung: **28.08.2019**
(21) Anmeldenummer: 13762836.8
(22) Anmeldetag: 17.09.2013
(51) Int. Cl.: F01B 23/10, F01B 31/08, F01K 17/04, F01K 25/10, F01K 25/14, F17C 9/04, F02C 1/04, F02M 21/02, F02M 25/10

(54) **VERFAHREN UND ANLAGE ZUR ENERGIEGEWINNUNG BEI DER ENTSPANNUNG VON PROZESSERDGAS**
METHOD AND SYSTEM FOR GENERATING ENERGY DURING THE EXPANSION OF NATURAL PROCESS GAS
PROCÉDÉ ET INSTALLATION DESTINÉS À RÉCUPÉRER DE L'ÉNERGIE LORS DE LA DÉTENTE D'UN GAZ NATUREL DE TRAITEMENT

(30) Priorität: 18.09.2012 EP 12184840
(43) Veröffentlichungstag der Anmeldung: 29.07.2015
(73) Patentinhaber: BASF SE, 67056 Ludwigshafen am Rhein (DE)
(72) Erfinder: HAIDER, Mirko, 67133 Maxdorf (DE); BROSTEAN, Thomas, 67434 Neustadt (DE)
(86) Internationale Anmeldenummer: PCT/EP2013/069199
(87) Internationale Veröffentlichungsnummer: WO 2014/044649

(56) Entgegenhaltungen:
- EP-A2- 0 004 398
- WO-A2-2004/046523
- DE-A1-102006 046 246
- JP-A- S5 756 614
- US-A- 4 132 065
- US-A- 5 628 191
- US-A1- 2005 065 391
- US-A1- 2010 252 028

## Beschreibung

Die vorliegende Erfindung betrifft ein Verfahren und eine Anlage zur Energiegewinnung bei der Entspannung von Prozesserdgas vor der Zuführung desselben zu einer Acetylen-Herstellungsanlage.

Prozesserdgas wird in der Regel mit einem Druck von bis zu 70 bar von Förder- und Verarbeitungsanlagen über Versorgungsleitungen (Fernleitungen) zu Gasversorgern und anderen Großabnehmern wie der chemischen Industrie transportiert. Unter Prozesserdgas im Sinne der vorliegenden Erfindung wird Erdgas verstanden, das ohne weitere stoffliche Aufbereitungsschritte in der chemischen Industrie verwendet werden kann. Es dient unter anderem als Grundstoff für die Herstellung von Acetylen, das eine wichtige Ausgangsverbindung bei der großtechnischen Herstellung von chemischen Erzeugnissen ist. Um für die Acetylen-Herstellung durch Oxidation verwendet werden zu können, muss das Prozesserdgas auf einen Druck zwischen 2 bar bis 8 bar entspannt werden. Diese Entspannung erfolgt nach dem Stand der Technik gewöhnlich über Regelschienen.

Eine Alternative zur Entspannung über Regelschienen stellen Expansionsanlagen für unter Druck stehende Gase dar, die aus dem Stand der Technik prinzipiell bekannt sind. So offenbart die EP 0 670 957 B1 eine Erdgas-Expansionsanlage mit einem Wärmetauscher zum Vorwärmen von unter hohem Druck stehendem Erdgas, einem Turbogenerator zum Entspannen des Erdgases auf einen niedrigeren Druck und zur Stromerzeugung aus der dabei frei werdenden Energie und einem Kraftwerk, das mit seiner Abwärme den Wärmetauscher speist. Das Kraftwerk besteht aus mehreren Blockheizkraftwerken aus jeweils einem Gas-Verbrennungsmotor und einem Generator. Dabei ist der Abwärmekreislauf der Blockheizkraftwerke thermisch mit einem externen Energieverbraucher oder Energieerzeuger gekoppelt, um die bei einem Digitalbetrieb der Blockheizkraftwerke ohne externe Kühlungsmaßnahmen anfallende Abwärme abzuführen.

Problematisch an solchen Expansionsanlagen ist einerseits, dass der Wirkungsgrad von Turbogeneratoren (eine Bauart von schnell laufenden Synchron-Generatoren) begrenzt und damit die Energiegewinnung wenig effizient ist, und andererseits, dass ein externes Kraftwerk benötigt wird, um die Wärmetauscher der Anlage zum Aufheizen des entspannten Gases zu versorgen. Hierdurch wird ein Großteil der Energie, die durch die Entspannung des unter Druck stehenden Gases gewonnen wurde, wieder verbraucht.

Vor diesem Hintergrund besteht die Aufgabe der Erfindung darin, die bei der Entspannung des unter hohem Druck stehenden Prozesserdgases freiwerdende Energie effizienter zu nutzen und nachhaltig Energie zu gewinnen.

Diese Aufgabe wird in einem ersten Aspekt der vorliegenden Erfindung durch ein Verfahren, gemäß Anspruch 1, zur Energiegewinnung bei der Entspannung von Prozesserdgas vor der Zuführung desselben zu einer Acetylen-Herstellungsanlage gelöst, das die Verfahrensschritte umfasst:
a) Zuführen des Prozesserdgases aus einer Prozesserdgas-Versorgungsleitung mit einer Temperatur von -10 °C bis 50 °C und einem Druck von 30 bar bis 70 bar zu einer ersten Heizstufe und Aufheizen des Prozesserdgases in der ersten Heizstufe auf eine Temperatur von 20 °C bis 40 °C,
b) Zuführen des in der ersten Heizstufe aufgeheizten Prozesserdgases zu einer zweiten Heizstufe und Aufheizen des Prozesserdgases in der zweiten Heizstufe auf eine Temperatur von 70 °C bis 140 °C,
c) Zuführen des in der zweiten Heizstufe aufgeheizten Prozesserdgases zu einer Entspannungsvorrichtung und Entspannen des Prozesserdgases in der Entspannungsvorrichtung auf einen Druck von 2 bar bis 8 bar, wobei die Entspannungsvorrichtung eine Kolbenexpansionsmaschine ist, die durch das Entspannen des Prozesserdgases betrieben wird und Energie erzeugt.

Unter einer Kolbenexpansionsmaschine im Sinne der vorliegenden Erfindung wird prinzipiell eine Vorrichtung verstanden, bei der unter Druck stehendes Gas in einen oder mehrere Zylinder geleitet und dort entspannt wird, wodurch in den Zylindern vorgesehene Kolben bewegt werden und mechanische Arbeit durch die Entspannung verrichtet wird. Die Entspannung kann dabei in einer oder in mehreren Stufen verlaufen.

Das Entspannen des Prozesserdgases in einer Kolbenexpansionsmaschine hat vor allem den Vorteil eines um 15 % bis 20 % höheren Wirkungsgrades gegenüber den im Stand der Technik eingesetzten Turbogeneratoren. Selbst wenn berücksichtigt wird, dass Turbogeneratoren auch gegenüber modernen Kolbenexpansionsmaschinen einen geringeren Wartungsaufwand erfordern, liegt mit dem erfindungsgemäßen Verfahren immer noch eine deutliche Effizienzsteigerung gegenüber dem Stand der Technik vor.

Nach dem erfindungsgemäßen Verfahren wird das Prozesserdgas nach seiner Entspannung in der Kolbenexpansionsmaschine auf einen Druck von 2 bar bis 8 bar einer Acetylen-Herstellungsanlage zugeführt wird. Somit stellt die vorliegende Erfindung das erste Verfahren bereit, mit dem Prozesserdgas für die chemische Industrie energieeffizient entspannt werden kann.

Um eine der Acetylen-Herstellung vorgeschaltete Heizstufe zu entlasten, hat es sich als vorteilhaft erwiesen, darüber hinaus in einem Verfahrensschritt d) das in der Kolbenexpansionsmaschine auf einen Druck von 2 bar bis 8 bar entspannte Prozesserdgas einer vierten Heizstufe zuzuführen und das Prozesserdgas in der vierten Heizstufe auf eine Temperatur von 40 °C bis 100 °C aufzuheizen, bevor das Prozesserdgas in Verfahrensschritt e) der Acetylen-Herstellungsanlage zugeführt wird.

Die durch die Entspannung des Prozesserdgases betriebene Kolbenexpansionsmaschine treibt vorzugsweise einen Generator zur Erzeugung von elektrischer Energie an. Die so erzeugte elektrische Energie kann in vorteilhafter Weise entweder in das öffentliche Stromnetz eingespeist, in geeigneten anlageninternen Speichervorrichtungen bevorratet oder direkt anderen Verbrauchern der Industrieanlage zugeleitet werden.

Das Verfahren umfasst das Entspannen des Prozesserdgases die Schritte:
c1) Entspannen des in der zweiten Heizstufe aufgeheizten Prozesserdgases einer ersten Entspannungsstufe der Kolbenexpansionsmaschine auf einen Druck von 15 bar bis 25 bar, wobei das Prozesserdgas nach dem Entspannen in der ersten Entspannungsstufe eine Temperatur von 15 °C bis 25 °C aufweist,
c2) Aufheizen des in der ersten Entspannungsstufe entspannten Prozesserdgases in einer dritten Heizstufe auf eine Temperatur von 70 °C bis 140 °C, und
c3) Entspannen des aufgeheizten Prozesserdgases in einer zweiten Entspannungsstufe der Kolbenexpansionsmaschine auf einen Druck von 2 bar bis 8 bar, wobei das Prozesserdgas nach dem Entspannen in der zweiten Entspannungsstufe eine Temperatur von 10 °C bis 100 °C aufweist.

Das zwei- oder mehrstufige Entspannen des Prozesserdgases mit zwischengeschaltetem Aufheizen dient einer effektiveren Verfahrensführung und einer effizienteren Energiebilanz, da das nach der ersten Entspannungsstufe abgekühlte Prozesserdgas nur moderat wieder aufgeheizt werden muss, um nach der zweiten Entspannungsstufe eine für die Weiterleitung des entspannten Prozesserdgases geeignete Temperatur aufzuweisen. Zudem werden durch das zwei- oder mehrstufige Entspannen auf Temperaturen in der Größenordnung der Umgebungstemperatur nachteilige Effekte wie Kondensation innerhalb der Anlage vermieden.

Das Aufheizen des Prozesserdgases kann in einer oder mehreren der ersten, zweiten, dritten und vierten Heizstufe mittels Plattenwärmetauschern erfolgen, die sich durch ein besonders positives Verhältnis von Oberfläche zu auszutauschender Wärme auszeichnen.

Plattenwärmetauscher im Sinne der vorliegenden Erfindung sind Wärmeüberträger in einer speziellen Bauform, die so aus Wärme leitenden Platten aufgebaut sind, dass jeweils in den aufeinander folgenden Zwischenräumen abwechselnd das aufzuheizende und das aufheizende Medium fließen. Der Plattenaufbau ist nach außen hin und zwischen den beiden Medien abgedichtet. Dabei können die einzelnen Platten in geeigneter Weise profiliert sein, um einen optimalen Wärmeübergang zu ermöglichen.

Zum Aufheizen des Prozesserdgases kann in der ersten Heizstufe zumindest teilweise die Abwärme des Generators und/oder der Kolbenexpansionsmaschine genutzt werden. Zum Aufheizen des Prozesserdgases in der zweiten und/oder dritten Heizstufe kann zumindest teilweise die Abwärme der Acetylen-Herstellungsanlage genutzt werden. Um das Prozesserdgas in der vierten Heizstufe aufzuheizen, kann zumindest teilweise die Abwärme der zweiten Heizstufe und/oder der dritten Heizstufe genutzt werden.

Durch die konsequente Nutzung der in der Anlage auftretenden bzw. vorhandenen Abwärme für das Aufheizen des Prozesserdgases wird ein Kraftwerk, wie es im Stand der Technik beschrieben ist, entbehrlich. Die Nutzung der anlageninternen Abwärme hat den weiteren Vorteil, dass gegenüber herkömmlichen Anlagen keine zusätzlichen Kühleinrichtungen vorgesehen werden müssen.

Die vorstehend genannte Aufgabe wird in einem zweiten Aspekt der Erfindung durch eine Anlage, gemäß Anspruch 6, zur Energiegewinnung bei der Entspannung von Prozesserdgas gelöst, die
- über eine oder mehrere Leitungen mit einer Acetylen-Herstellungsanlage verbunden ist, so dass eine im Stand der Technik bislang nicht bekannte, integrierte Anlage aus Prozessgas-Entspannung und Acetylen-Herstellung geschaffen wird, die sich durch eine hohe Energieeffizient auszeichnet, und
- eine erste Heizstufe zum Aufheizen des Prozesserdgases, die über eine Zuleitung mit einer Prozesserdgas-Versorgungsleitung verbunden ist,
- eine zweite Heizstufe zum Aufheizen des Prozesserdgases, die über eine Leitung mit der ersten Heizstufe verbunden ist, und
- eine Entspannungsvorrichtung zum Entspannen des Prozesserdgases, die über eine Leitung mit der zweiten Heizstufe verbunden ist,
umfasst. Die Anlage zeichnet sich dadurch aus, dass die Entspannungsvorrichtung eine Kolbenexpansionsmaschine zur Erzeugung von Energie ist, die verglichen mit herkömmlich eingesetzten Turbogeneratoren einen um 15 % bis 20 % höheren Wirkungsgrad aufweist.

Dieser Vorteil bleibt auch erhalten, obwohl eine moderne Kolbenexpansionsmaschine einen höheren Wartungsaufwand als ein Turbogenerator erfordert. Unter Berücksichtigung dieser Tatsache liegt gegenüber einem Turbogenerator trotzdem eine deutliche Effizienzsteigerung vor.

In einer Weiterbildung der Anlage ist zwischen der Kolbenexpansionsmaschine und der Acetylen-Herstellungsanlage eine vierte Heizstufe zum Aufheizen des entspannten Prozesserdgases angeordnet, die über eine Leitung mit der Kolbenexpansionsmaschine und über eine Leitung mit der Acetylen-Herstellungsanlage verbunden ist, so dass die zur Vorwärmung des Prozesserdgases für die Acetylen-Herstellung vorzusehenden Heizstufen kleiner und damit sparsamer dimensioniert werden können bzw. weniger Energie benötigen.

Um die bei der Entspannung des Prozesserdgases gewonnene Energie effizient nutzbar zu machen, ist die Kolbenexpansionsmaschine vorzugsweise mit einem Generator zur Erzeugung von elektrischer Energie verbunden. Dieser Generator kann seinerseits mit dem öffentlichen Stromnetz, mit geeigneten anlageninternen Speichervorrichtungen oder Verbrauchern innerhalb der Industrieanlage verbunden sein.

Es hat sich als vorteilhaft herausgestellt, wenn die Kolbenexpansionsmaschine zumindest zweistufig ausgeführt ist, wobei zwischen einer ersten Entspannungsstufe zum Entspannen des Prozesserdgases und einer zweiten Entspannungsstufe zum Entspannen des teilweise entspannten Prozesserdgases eine dritte Heizstufe zum Aufheizen des teilweise entspannten Prozesserdgases angeordnet ist, so dass die Auslegung der dritten Heizstufe in der Kolbenexpansionsmaschine und der vierten Heizstufe vor der Acetylen-Herstellungsanlage kleiner ausfallen kann und keine apparativen Vorkehrungen gegen beispielsweise Kondensatbildung in der Anlage getroffen werden müssen.

Bevorzugt ist eine oder sind mehrere der ersten, zweiten, dritten und vierten Heizstufen Plattenwärmetauscher ausgeführt, die effizienter arbeiten und innerhalb der Anlage Platz sparender anzuordnen sind als andere Wärmetauschertypen.

In einer speziellen Ausführungsform ist die erste Heizstufe über eine Abwärmeleitung mit dem Generator und/oder der Kolbenexpansionsmaschine verbunden. Ferner kann die zweite Heizstufe über eine Abwärmeleitung mit der Acetylen-Herstellungsanlage verbunden sein. Es ist zudem bevorzugt, wenn die dritte Heizstufe über eine Abwärmeleitung mit der Acetylen-Herstellungsanlage verbunden ist. Die vierte Heizstufe kann über Abwärmeleitungen mit der zweiten Heizstufe und der dritten Heizstufe verbunden sein.

Durch das erfindungsgemäße System, Wärme erzeugende und Wärme verbrauchende Anlagenteile miteinander zu verbinden, können zusätzliche Kühl- und Heizaggregate eingespart werden, was unter anderem dazu führt, dass die gesamte Anlage kompakter konzipiert werden kann und die Investitionen geringer sind.

Weitere Merkmale, Vorteile und Anwendungsmöglichkeiten ergeben sich aus der nachfolgenden Beschreibung eines bevorzugten, die Erfindung aber nicht einschränkenden Ausführungsbeispiels, anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Die einzige Figur zeigt ein Verfahrensschema zur Energiegewinnung bei der Entspannung von Prozesserdgas.

Nach dem erfindungsgemäßen Verfahren wird die Entspannung des Prozesserdgases P anstatt über eine herkömmliche Regelschiene über eine Kolbenexpansionsmaschine E durchgeführt, wobei die Druckentspannung dazu genutzt wird, in der Kolbenexpansionsmaschine E mechanische Arbeit zu verrichten, die wiederum mit Hilfe eines Generators G elektrischen Strom erzeugt.

Nach dem Ersten Hauptsatz der Thermodynamik muss die Energie, die einem Gas bei der Entspannung in Form von mechanischer Arbeit entzogen wird, diesem in Form von Wärme wieder zugeführt werden, um das Gas nach der Entspannung wieder auf seine Ausgangstemperatur zu bringen.

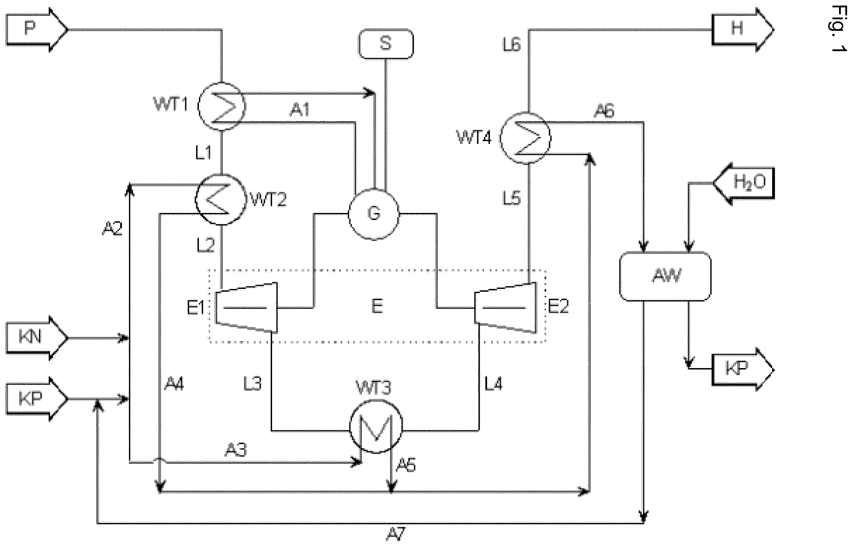

Wie dem Verfahrensschema der Figur 1 zu entnehmen ist, wird das Prozesserdgas P aus einer in der Figur nicht dargestellten Versorgungsleitung mit einem Druck von bis zu 70 bar der Anlage über eine Zuleitung Z zugeführt, wobei der Versorgungsdruck in Abhängigkeit von der Transportentfernung bis auf 40 bar verringert sein kann. Abhängig von Druck, Versorgungslänge und Außentemperatur hat das Prozesserdgas P eine Temperatur zwischen 0 °C und 25 °C.

In einer ersten Heizstufe WT1 wird das Prozesserdgas P auf eine Temperatur im Bereich von 20 °C bis 35 °C aufgeheizt, bevor es über eine Leitung L1 einer zweiten Heizstufe WT2 zugeführt und dort auf eine Temperatur im Bereich von 70 °C bis 85 °C weiter aufgeheizt wird.

Als Heizstufen WT1, WT2 werden vorzugsweise Plattenwärmetauscher verwendet.

Das in den Heizstufen WT1, WT2 aufgeheizte Prozesserdgas P, das unter einem Druck von bis zu 70 bar steht, wird nun über eine Leitung L2 der Kolbenexpansionsmaschine E zugeführt. In der beschriebenen Ausführungsform handelt es sich um einen Kolbenmotor der Firma Spilling, deren Kolbenmotoren im Stand der Technik überwiegend als Schiffsdieselmotoren bekannt sind und die bislang noch nicht als Kolbenexpansionsmaschinen zum großtechnischen Einsatz in Anlagen zur Herstellung von Acetylen verwendet wurden.

Über einen in der Figur nicht dargestellten Pulsationsdämpfer wird das Prozesserdgas P auf sechs Zylinder einer ersten Entspannungsstufe E1 des Spilling-Kolbenmotors aufgeteilt, wobei die Zylinder über zugehörige Steuerschieber mit dem Prozesserdgas P gefüllt werden. Beim Entspannen treibt das Prozesserdgas P einen doppelt wirkenden Kolben des Spilling-Kolbenmotors an. Die Steuerschieber und somit der Füllgrad der Zylinder werden über die Druckregelung im Ausgang der ersten Entspannungsstufe E1 eingestellt.

Nach der ersten Entspannungsstufe E1 tritt das Prozesserdgas P mit einem Druck von ca. 20 bar und einer Temperatur von 15 °C bis 25 °C über einen Pulsationsdämpfer aus und wird über eine Leitung L3 einer dritten Heizstufe WT3 zugeführt, wo es auf eine Temperatur im Bereich zwischen 70 °C und 85 °C aufgeheizt wird, bevor es über eine Leitung L4 einer zweiten Entspannungsstufe E2 zugeführt wird.

In der zweiten Entspannungsstufe E2 wird anlog zur ersten Entspannungsstufe E1 das Prozesserdgas P über einen Pulsationsdämpfer wiederum auf sechs Zylinder aufgeteilt. Auch hier werden zugehörige Steuerschieber über die Druckregelung im Ausgang der zweiten Entspannungsstufe E2 eingestellt.

Aus der zweiten Entspannungsstufe E2 tritt das Prozesserdgas P mit 4 bar bis 6 bar und einer Temperatur zwischen 10 °C und 25 °C über einen weiteren Pulsationsdämpfer aus und wird über eine Leitung L5 einer vierten Heizstufe WT4 zugeführt, wo es zur Entlastung einer der Acetylen-Herstellung H vorgeschalteten Heizstufe (in der Figur nicht dargestellt) auf 40 °C bis 50 °C aufgeheizt wird.

Die Kolbenexpansionsmaschine E, d. h. hier der Spilling-Kolbenmotor, treibt mit vorzugsweise maximal 1.000 U/min einen Generator G zur Stromerzeugung an. Der erzeugte Strom kann beispielsweise in der Acetylenanlage selbst genutzt oder in anderen Anlagen zur Verfügung gestellt werden.

Die erfindungsgemäße Ausführungsform zeichnet sich ferner durch einen Wärmeverbund aus, der im Folgenden beschrieben wird.

Für das Aufheizen des aus der Versorgungsleitung über entnommenen Prozesserdgases P wird in der ersten Heizstufe WT1 über einen Wärmekreislauf A1 die Abwärme des Generators G sowie über einen in der Figur nicht dargestellten weiteren Wärmekreislauf die Abwärme des zum Kühlen des Spilling-Kolbenmotors E eingesetzten Ölkühlsystems genutzt.

In der zweiten Heizstufe WT2 wird zum Aufheizen des Prozesserdgases P über eine Abwärmeleitung A2 Kondensat KP aus der Acetylen-Herstellungsanlage H genutzt, das bei Bedarf durch Kondensat KN aus einem internen Netz der Industrieanlage ergänzt wird. Das Kondensat KP, KN hat eine Temperatur von 95 °C bis 105 °C und wird in der zweiten Heizstufe WT2 abgekühlt.

Ebenso wird in der dritten Heizstufe WT3 über eine Abwärmeleitung A3 das 95 C bis 105 °C warme Kondensat KP aus der Acetylen-Herstellungsanlage H und ggf. Kondensat KN aus dem internen Netz der Industrieanlage genutzt, um das aus der ersten Entspannungsstufe E1 austretende Prozesserdgas P auf 70 °C bis 85 °C aufzuheizen.

Das vorstehend schon beschriebene Aufheizen des auf 4 bar bis 8 bar entspannten Prozesserdgases P in der vierten Heizstufe WT4 erfolgt über Abwärmeleitungen A4, A5 mit dem Kondensat KP, KN, das in den Heizstufen WT2 und WT3 bereits abgekühlt wurde. In diesen Heizstufen wird das Kondensat KP, KN weiter abgekühlt und anschließend der Anlage AW zur Nutzung der Abwärme an der Acetylenanlage H zugeführt. Das so abgekühlte Kondensat wird zur Kondensation von in der Anlage vorhandenem, nieder gespanntem Dampf verwendet, wodurch der Einsatz von kaltem, voll entionisiertem Wasser H₂O reduziert werden kann. Das in der Anlage AW wieder erwärmte Kondensat wird über eine Abwärmeleitung A7 dem Kondensatprozess wieder zugeführt.

Die Einsparung an voll entionisiertem Wasser H₂O kann durch die erfindungsgemäße Ausführungsform bis zu 370.000 t pro Jahr betragen, während gleichzeitig bis zu 8.800 t pro Jahr an Dampf eingespart werden können. Zusätzlich können in der Acetylen-Herstellungsanlage H durch das höhere Temperaturniveau des Prozesserdgases der Leitung L6 730.000 m³ pro Jahr Heizerdgas für die erforderliche Aufheizung des Prozesserdgases auf Prozesstemperatur eingespart werden.

### Bezugszeichenliste

- A1: Wärmekreislauf
- A2, A3, A4, A5, A6, A7: Abwärmeleitungen
- E: Entspannungsvorrichtung (Kolbenexpansionsmaschine)
- E1: erste Entspannungsstufe
- E2: zweite Entspannungsstufe
- AW: Anlage zur Nutzung der Abwärme
- G: Generator
- H: Acetylen-Herstellungsanlage
- KN: Kondensat (Netz)
- KP: Kondensat (Prozess)
- L1, L2, L3, L4, L5, L6: Leitungen
- P: Prozesserdgas
- S: Stromnetz
- WT1: erste Heizstufe
- WT2: zweite Heizstufe
- WT3: dritte Heizstufe
- WT4: vierte Heizstufe

## Patentansprüche

1. Verfahren zur Energiegewinnung bei der Entspannung von Prozesserdgas (P) vor der Zuführung desselben zu einer Acetylen-Herstellungsanlage (H), umfassend die Verfahrensschritte:
a) Zuführen des Prozesserdgases (P) aus einer Prozesserdgas-Versorgungsleitung mit einer Temperatur von -10 °C bis 50 °C und einem Druck von 30 bar bis 70 bar zu einer ersten Heizstufe (WT1) und Aufheizen des Prozesserdgases (P) in der ersten Heizstufe (WT1) auf eine Temperatur von 20 °C bis 40 °C,
b) Zuführen des in der ersten Heizstufe (WT1) aufgeheizten Prozesserdgases (P) zu einer zweiten Heizstufe (WT2) und Aufheizen des Prozesserdgases (P) in der zweiten Heizstufe (WT2) auf eine Temperatur von 70 °C bis 140 °C,
c) Zuführen des in der zweiten Heizstufe (WT2) aufgeheizten Prozesserdgases (P) zu einer Entspannungsvorrichtung (E) und Entspannen des Prozesserdgases (P) in der Entspannungsvorrichtung (E) auf einen Druck von 2 bar bis 8 bar, wobei die Entspannungsvorrichtung (E) eine Kolbenexpansionsmaschine ist, die durch das Entspannen des Prozesserdgases (P) betrieben wird und Energie erzeugt, und wobei das Entspannen des Prozesserdgases (P) in Verfahrensschritt c) **gekennzeichnet ist durch** :
c1) Entspannen des in der zweiten Heizstufe (WT2) aufgeheizten Prozesserdgases (P) in einer ersten Entspannungsstufe (E1) der Kolbenexpansionsmaschine (E) auf einen Druck von 15 bar bis 25 bar, wobei das Prozesserdgas (P) nach dem Entspannen in der ersten Entspannungsstufe (E1) eine Temperatur von 15 °C bis 25 °C aufweist,
c2) Aufheizen des in der ersten Entspannungsstufe (E1) entspannten Prozesserdgases (P) in einer dritten Heizstufe (WT3) auf eine Temperatur von 70 °C bis 140 °C, und
c3) Entspannen des aufgeheizten Prozesserdgases (P) in einer zweiten Entspannungsstufe (E2) der Kolbenexpansionsmaschine (E) auf einen Druck von 2 bar bis 8 bar, wobei das Prozesserdgas (P) nach dem Entspannen in der zweiten Entspannungsstufe (E2) eine Temperatur von 10 °C bis 100 °C aufweist, und
d) Zuführen des in der Kolbenexpansionsmaschine (E) auf einen Druck von 2 bar bis 8 bar entspannten Prozesserdgases (P) zu einer vierten Heizstufe (WT4) und Aufheizen des Prozesserdgases (P) in der vierten Heizstufe (WT4) auf eine Temperatur von 40 °C bis 100 °C, bevor das Prozesserdgas (P) der Acetylen-Herstellungsanlage (H) zugeführt wird.

2. Verfahren nach Anspruch 1, wobei die durch die Entspannung des Prozesserdgases (P) betriebene Kolbenexpansionsmaschine (E) einen Generator (G) zur Erzeugung von elektrischer Energie antreibt.

3. Verfahren nach einem der Ansprüche 1 bis 2,
- wobei das Aufheizen des Prozesserdgases (P) in der ersten Heizstufe (WT1) und/oder zweiten Heizstufe (WT2) und/oder dritten Heizstufe (WT3) und/oder vierten Heizstufe (WT4) mittels Plattenwärmetauschern erfolgt und/oder
- wobei zum Aufheizen des Prozesserdgases (P) in der ersten Heizstufe (WT1) zumindest teilweise die Abwärme des Generators (G) und/oder der Kolbenexpansionsmaschine (E) genutzt wird und/oder
- wobei zum Aufheizen des Prozesserdgases (P) in der zweiten Heizstufe (WT2) und/oder dritten Heizstufe (WT3) zumindest teilweise die Abwärme der Acetylen-Herstellungsanlage (H) genutzt wird und/oder
- wobei zum Aufheizen des Prozesserdgases (P) in der vierten Heizstufe (WT4) zumindest teilweise die Abwärme der zweiten Heizstufe (WT2) und/oder der dritten Heizstufe (WT3) genutzt wird.

4. Verfahren nach einem der Ansprüche 1 bis 3,
- wobei das Prozesserdgas (P) in der ersten Heizstufe (WT1) auf 25 °C bis 35 °C, aufgeheizt wird und/oder
- wobei das Prozesserdgas (P) in der zweiten Heizstufe (WT2) auf 75 °C bis 85 °C aufgeheizt wird.

5. Verfahren nach einem der Ansprüche 1 bis 4,
- wobei das Prozesserdgas (P) in der ersten Entspannungsstufe (E1) auf 19 bar bis 22 bar entspannt wird und/oder
- wobei das Prozesserdgas (P) in der zweiten Entspannungsstufe (E2) auf 4 bar bis 6 bar, entspannt wird.

6. Anlage zur Energiegewinnung bei der Entspannung von Prozesserdgas (P), die über eine oder mehrere Leitungen (L3, L4, L5, L6) mit einer Acetylen-Herstellungsanlage (H) verbunden ist, umfassend
- eine erste Heizstufe (WT1) zum Aufheizen des Prozesserdgases (P), die über eine Zuleitung (Z) mit einer Prozesserdgas-Versorgungsleitung verbunden ist,
- eine zweite Heizstufe (WT2) zum Aufheizen des Prozesserdgases (P), die über eine Leitung (L1) mit der ersten Heizstufe (WT1) verbunden ist,
- eine Entspannungsvorrichtung (E) zum Entspannen des Prozesserdgases (P), die über eine Leitung (L2) mit der zweiten Heizstufe (WT2) verbunden ist, **dadurch gekennzeichnet, dass** die Entspannungsvorrichtung (E) eine Kolbenexpansionsmaschine zur Erzeugung von Energie ist, wobei die Kolbenexpansionsmaschine (E) zumindest zweistufig ausgeführt ist, wobei zwischen einer ersten Entspannungsstufe (E1) zum Entspannen des Prozesserdgases (P) und einer zweiten Entspannungsstufe (E2) zum Entspannen des teilweise entspannten Prozesserdgases (P) eine dritte Heizstufe (WT3) zum Aufheizen des teilweise entspannten Prozesserdgases (P) angeordnet ist, und dass zwischen der Kolbenexpansionsmaschine (E) und der Acetylen-Herstellungsanlage (H) eine vierte Heizstufe (WT4) zum Aufheizen des entspannten Prozesserdgases (P) angeordnet ist, die über eine Leitung (L5) mit der Kolbenexpansionsmaschine (E) und über eine Leitung (L6) mit der Acetylen-Herstellungsanlage (H) verbunden ist.

7. Anlage nach Anspruch 6, **dadurch gekennzeichnet, dass** die Kolbenexpansionsmaschine (E) mit einem Generator (G) zur Erzeugung von elektrischer Energie verbunden ist.

8. Anlage nach einem der Ansprüche 6 bis 7, **dadurch gekennzeichnet, dass** die erste Heizstufe (WT1) und/oder zweite Heizstufe (WT2) und/oder dritte Heizstufe (WT3) und/oder vierte Heizstufe (WT4) als Plattenwärmetauscher ausgeführt ist/sind.

9. Anlage nach einem der Ansprüche 6 bis 8, **dadurch gekennzeichnet, dass**
- die erste Heizstufe (WT1) über eine Abwärmeleitung (A1) mit dem Generator (G) und/oder der Kolbenexpansionsmaschine (E) verbunden ist und/oder
- die zweite Heizstufe (WT2) über eine Abwärmeleitung (A2) mit der Acetylen-Herstellungsanlage (H) verbindbar ist und/oder
- die dritte Heizstufe (WT3) über eine Abwärmeleitung (A3) mit der Acetylen-Herstellungsanlage (H) verbindbar ist und/oder
- die vierte Heizstufe (WT4) über Abwärmeleitungen (A4, A5) mit der zweiten Heizstufe (WT2) und der dritten Heizstufe (WT3) verbunden ist.

## Claims

1. A method for energy recuperation in the expansion of processed natural gas (P) before the delivery of the latter to an acetylene production plant (H), comprising the steps:
a) delivery of the processed natural gas (P) from a processed natural gas supply line with a temperature of -10°C to 50°C and a pressure of 30 bar to 70 bar to a first heating stage (WT1) and heating of the processed natural gas (P) in the first heating stage (WT1) to a temperature of 20°C to 40°C,
b) delivery of the processed natural gas (P) heated in the first heating stage (WT1) to a second heating stage (WT2) and heating of the processed natural gas (P) in the second heating stage (WT2) to a temperature of 70°C to 140°C,
c) delivery of the processed natural gas (P) heated in the second heating stage (WT2) to an expansion device (E) and expansion of the processed natural gas (P) in the expansion device (E) to a pressure of 2 bar to 8 bar, the expansion device (E) being a piston expansion machine which is operated by the expansion of the processed natural gas (P) and which generates energy, and the expansion of the processed natural gas (P) in step c) being **characterized by**:
c1) expansion of the processed natural gas (P), heated in the second heating stage (WT2), in a first expansion stage (E1) of the piston expansion machine (E) to a pressure of 15 bar to 25 bar, the processed natural gas (P) having a temperature of 15°C to 25°C after the expansion in the first expansion stage (E1),
c2) heating of the processed natural gas (P), expanded in the first expansion stage (E1), in a third heating stage (WT3) to a temperature of 70°C to 140°C, and
c3) expansion of the heated processed natural gas (P) in a second expansion stage (E2) of the piston expansion machine (E) to a pressure of 2 bar to 8 bar, the processed natural gas (P) having a temperature of 10°C to 100°C after the expansion in the second expansion stage (E2), and
d) delivery of the processed natural gas (P) expanded in the piston expansion machine (E) to a pressure of 2 bar to 8 bar to a fourth heating stage (WT4) and heating of the processed natural gas (P) in the fourth heating stage (WT4) to a temperature of 40°C to 100°C before the processed natural gas (P) is delivered to the acetylene production plant (H) .

2. The method according to claim 1, the piston expansion machine (E) operated by the expansion of the processed natural gas (P) driving a generator (G) for generating electrical energy.

3. The method according to any of claims 1 to 2,
- the heating of the processed natural gas (P) in the first heating stage (WT1) and/or the second heating stage (WT2) and/or the third heating stage (WT3) and/or the fourth heating stage (WT4) taking place by means of plate heat exchangers, and/or
- the waste heat of the generator (G) and/or of the piston expansion machine (E) being utilized at least partially for heating the processed natural gas (P) in the first heating stage (WT1), and/or
- the waste heat of the acetylene production plant (H) being utilized at least partially for heating the processed natural gas (P) in the second heating stage (WT2) and/or the third heating stage (WT3), and/or
- the waste heat of the second heating stage (WT2) and/or the third heating stage (WT3) being utilized at least partially for heating the processed natural gas (P) in the fourth heating stage (WT4).

4. The method according to any of claims 1 to 3,
- the processed natural gas (P) being heated to 25°C to 35°C in the first heating stage (WT1), and/or
- the processed natural gas (P) being heated to 75°C to 85°C in the second heating stage (WT2).

5. The method according to sny of claims 1 to 4,
- the processed natural gas (P) being expanded to 19 bar to 22 bar in the first expansion stage (E1), and/or
- the processed natural gas (P) being expanded to 4 bar to 6 bar in the second expansion stage (E2) .

6. A plant for energy recuperation in the expansion of processed natural gas (P), which is connected via one or more lines (L3, L4, L5, L6) to an acetylene production plant (H), comprising
- a first heating stage (WT1) for heating the processed natural gas (P), which heating stage is connected via a feed line (Z) to a processed natural gas supply line,
- a second heating stage (WT2) for heating the processed natural gas (P), which heating stage is connected via a line (L1) to the first heating stage (WT1),
- an expansion device (E) for expanding the processed natural gas (P), which expansion device is connected via a line (L2) to the second heating stage (WT2), wherein the expansion device (E) is a piston expansion machine for generating energy, wherein the piston expansion machine (E) is of at least two-stage design, a third heating stage (WT3) for heating the partially expanded processed natural gas (P) being arranged between a first expansion stage (E1) for expanding the processed natural gas (P) and a second expansion stage (E2) for expanding the partially expanded processed natural gas (P), and wherein a fourth heating stage (WT4) for heating the expanded processed natural gas (P) is arranged between the piston expansion machine (E) and the acetylene production plant (H) and is connected via a line (L5) to the piston expansion machine (E) and via a line (L6) to the acetylene production plant (H).

7. The plant according to claim 6, wherein the piston expansion machine (E) is connected to a generator (G) for generating electrical energy.

8. The plant according to any of claims 6 to 7, wherein the first heating stage (WT1) and/or the second heating stage (WT2) and/or the third heating stage (WT3) and/or the fourth heating stage (WT4) is/are designed as plate heat exchangers.

9. The plant according to any of claims 6 to 8, wherein
- the first heating stage (WT1) is connected via a waste heat line (A1) to the generator (G) and/or the piston expansion machine (E), and/or
- the second heating stage (WT2) can be connected via a waste heat line (A2) to the acetylene production plant (H), and/or
- the third heating stage (WT3) can be connected via a waste heat line (A3) to the acetylene production plant (H), and/or
- the fourth heating stage (WT4) is connected via waste heat lines (A4, A5) to the second heating stage (WT2) and the third heating stage (WT3).

## Revendications

1. Procédé de génération d'énergie lors de la détente d'un gaz naturel de procédé (P) avant l'introduction de celui-ci dans une unité de fabrication d'acétylène (H), comprenant les étapes de procédé suivantes :
a) l'introduction du gaz naturel de procédé (P) à partir d'une conduite d'alimentation en gaz naturel de procédé à une température de -10 °C à 50 °C et une pression de 30 bar à 70 bar dans une première étape de chauffage (WT1) et le chauffage du gaz naturel de procédé (P) dans la première étape de chauffage (WT1) à une température de 20 °C à 40 °C,
b) l'introduction du gaz naturel de procédé (P), chauffé dans la première étape de chauffage (WT1), dans une deuxième étape de chauffage (WT2), et le chauffage du gaz naturel de procédé (P) dans la deuxième étape de chauffage (WT2) à une température de 70 °C à 140 °C,
c) l'introduction du gaz naturel de procédé (P) chauffé dans la deuxième étape de chauffage (WT2) dans un dispositif de détente (E), et la détente du gaz naturel de procédé (P) dans le dispositif de détente (E) à une pression de 2 bar à 8 bar, le dispositif de détente (E) étant une machine d'expansion à piston qui est actionnée par la détente du gaz naturel de procédé (P) et génère de l'énergie, et la détente du gaz naturel de procédé (P) à l'étape de procédé c) étant **caractérisée par** :
c1) la détente du gaz naturel de procédé (P) chauffé dans la deuxième étape de chauffage (WT2) dans une première étape de détente (E1)de la machine d'expansion à piston (E) à une pression de 15 bar à 25 bar, le gaz naturel de procédé (P) présentant après la détente dans la première étape de détente (E1) une température de 15 °C à 25 °C,
c2) le chauffage du gaz naturel de procédé (P) détendu dans la première étape de détente (E1) dans une troisième étape de chauffage (WT3) à une température de 70 °C à 140 °C, et
c3) la détente du gaz naturel de procédé (P) chauffé dans une deuxième étape de détente (E2) de la machine d'expansion à piston (E) à une pression de 2 bar à 8 bar, le gaz naturel de procédé (P) présentant après la détente dans la deuxième étape de détente (E2) une température de 10 °C à 100 °C, et
d) l'introduction du gaz naturel de procédé (P) détendu dans la machine d'expansion à piston (E) à une pression de 2 bar à 8 bar dans une quatrième étape de chauffage (WT4), et le chauffage du gaz naturel de procédé (P) dans la quatrième étape de chauffage (WT4) à une température de 40 °C à 100 °C, avant l'introduction du gaz naturel de procédé (P) dans l'unité de fabrication d'acétylène (H).

2. Procédé selon la revendication 1, dans lequel la machine d'expansion à piston (E) actionnée par la détente du gaz naturel de procédé (P) actionne un générateur (G) pour la génération d'énergie électrique.

3. Procédé selon l'une quelconque des revendications 1 et 2,
- dans lequel le chauffage du gaz naturel de procédé (P) dans la première étape de chauffage (WT1) et/ou la deuxième étape de chauffage (WT2) et/ou la troisième étape de chauffage (WT3) et/ou la quatrième étape de chauffage (WT4) a lieu au moyen d'échangeurs de chaleur à plaques, et/ou
- dans lequel la chaleur résiduaire du générateur (G) et/ou de la machine d'expansion à piston (E) est au moins partiellement utilisée pour le chauffage du gaz naturel de procédé (P) dans la première étape de chauffage (WT1), et/ou
- dans lequel la chaleur résiduaire de l'unité de fabrication d'acétylène (H) est au moins partiellement utilisée pour le chauffage du gaz naturel de procédé (P) dans la deuxième étape de chauffage (WT2) et/ou la troisième étape de chauffage (WT3), et/ou
- dans lequel la chaleur résiduaire de la deuxième étape de chauffage (WT2) et/ou de la troisième étape de chauffage (WT3) est au moins partiellement utilisée pour le chauffage du gaz naturel de procédé (P) dans la quatrième étape de chauffage (WT4).

4. Procédé selon l'une quelconque des revendications 1 à 3,
- dans lequel le gaz naturel de procédé (P) est chauffé dans la première étape de chauffage (WT1) à une température de 25 °C à 35 °C, et/ou
- dans lequel le gaz naturel de procédé (P) est chauffé dans la deuxième étape de chauffage (WT2) à une température de 75 °C à 85 °C.

5. Procédé selon l'une quelconque des revendications 1 à 4,
- dans lequel le gaz naturel de procédé (P) est détendu dans la première étape de détente (E1) à une pression de 19 bar à 22 bar, et/ou
- dans lequel le gaz naturel de procédé (P) est détendu dans la deuxième étape de détente (E2) à une pression de 4 bar à 6 bar.

6. Unité pour la génération d'énergie lors de la détente d'un gaz naturel de procédé (P), qui est raccordée par une ou plusieurs conduites (L3, L4, L5, L6) avec une unité de fabrication d'acétylène (H), comprenant :
- un première étape de chauffage (WT1) pour le chauffage du gaz naturel de procédé (P), qui est raccordée par une conduite d'entrée (Z) avec une conduite d'alimentation en gaz naturel de procédé,
- une deuxième étape de chauffage (WT2) pour le chauffage du gaz naturel de procédé (P), qui est raccordée par une conduite (L1) avec la première étape de chauffage (WT1),
- un dispositif de détente (E) pour la détente du gaz naturel de procédé (P), qui est raccordé par une conduite (L2) avec la deuxième étape de chauffage (WT2),
**caractérisée en ce que** le dispositif de détente (E) est une machine d'expansion à piston pour la génération d'énergie, la machine d'expansion à piston (E) étant configurée au moins à deux étapes, une troisième étape de chauffage (WT3) pour le chauffage du gaz naturel de procédé (P) partiellement détendu étant agencée entre une première étape de détente (E1) pour la détente du gaz naturel de procédé (P) et une deuxième étape de détente (E2) pour la détente du gaz naturel de procédé (P) partiellement détendu,
et **en ce qu'**une quatrième étape de chauffage (WT4) pour le chauffage du gaz naturel de procédé (P) détendu est agencée entre la machine d'expansion à piston (E) et l'unité de fabrication d'acétylène (H), laquelle étape est raccordée par une conduite (L5) avec la machine d'expansion à piston (E) et par une conduite (L6) avec l'unité de fabrication d'acétylène (H).

7. Unité selon la revendication 6, **caractérisée en ce que** la machine d'expansion à piston (E) est raccordée avec un générateur (G) pour la génération d'énergie électrique.

8. Unité selon l'une quelconque des revendications 6 et 7, **caractérisée en ce que** la première étape de chauffage (WT1) et/ou la deuxième étape de chauffage (WT2) et/ou la troisième étape de chauffage (WT3) et/ou la quatrième étape de chauffage (WT4) sont configurées sous la forme d'échangeurs de chaleur à plaques.

9. Unité selon l'une quelconque des revendications 6 à 8, **caractérisée en ce que**
- la première étape de chauffage (WT1) est raccordée par une conduite de chaleur résiduaire (A1) avec le générateur (G) et/ou la machine d'expansion à piston (E), et/ou
- la deuxième étape de chauffage (WT2) peut être raccordée par une conduite de chaleur résiduaire (A2) avec l'unité de fabrication d'acétylène (H), et/ou
- la troisième étape de chauffage (WT3) peut être raccordée par une conduite de chaleur résiduaire (A3) avec l'unité de fabrication d'acétylène (H), et/ou
- la quatrième étape de chauffage (WT4) est raccordée par des conduites de chaleur résiduaire (A4, A5) avec la deuxième étape de chauffage (WT2) et la troisième étape de chauffage (WT3).
